# EUROPÄISCHE PATENTSCHRIFT

(11) **EP 0 918 223 B1**
(45) Veröffentlichungstag und Bekanntmachung des Hinweises auf die Patenterteilung: **24.11.2004**
(21) Anmeldenummer: 98250320.3
(22) Anmeldetag: 10.09.1998
(51) Int. Cl.: G01P 3/66, B61L 3/12, G01P 21/02

(54) **Geschwindigkeitsprüfeinrichtung**
Velocity monitoring device
Dispositif de surveillance de vitesse

(30) Priorität: 19.09.1997 DE 19742328
(43) Veröffentlichungstag der Anmeldung: 26.05.1999
(73) Patentinhaber: SIEMENS AKTIENGESELLSCHAFT, 80333 München (DE)
(72) Erfinder: Lange, Hans-Arnim, 38124 Braunschweig (DE)

(56) Entgegenhaltungen:
- DE-A- 3 106 432
- US-A- 4 379 330
- S.GERSTING: "Sicherung von Langsamfahrstellen" SIGNAL + DRAHT, Bd. 64, Nr. 6-7, Juni 1972, Seiten 83-89, XP002094392 Frankfurt A.M. DE
- PATENT ABSTRACTS OF JAPAN vol. 095, no. 007, 31. August 1995 -& JP 07 107752 A (MITSUTERU KIMURA;OTHERS: 01), 21. April 1995 -& US 5 801 475 A (M.KIMURA) 1. September 1998

## Beschreibung

Die Erfindung bezieht sich auf eine Geschwindigkeitsprüfeinrichtung nach dem Oberbegriff des Patentanspruches 1. Eine derartige Einrichtung ist z. B. aus Signal + Draht, 1972, Heft 6/7, Seiten 83 bis 89 bekannt.

Dort wird über die Anordnung und den Aufbau einer ortsfesten Geschwindigkeitsprüfeinrichtung für den Bahnbetrieb berichtet, die dazu dient, die Geschwindigkeit vorüberlaufender Fahrzeuge auf das Einhalten vorgegebener Höchstgeschwindigkeiten zu überprüfen. Dazu sind entlang der Strecke in einem vorgegebenen geringen Abstand vor und hinter einem Gleismagneten zwei Schaltmagnete zum Ein- bzw. Ausschalten einer Zeitmeßeinrichtung angeordnet. Das Ein- und Ausschalten geschieht auf induktivem Wege beim Vorbeibewegen eines fahrzeugseitigen Sendemagneten an den gleisseitigen Schaltmagneten. Die Meßzeit ist ein Maß für die Vorrückgeschwindigkeit des die Schaltmagneten beeinflussenden Fahrzeugs. Der in Fahrrichtung hinter dem Einschaltmagneten angeordnete Gleismagnet dient zur Übermittlung eines Befehls zur Zwangsbremsung von Fahrzeugen, welche die Meßstrecke zu schnell durchlaufen haben oder er dient dazu, auf dem vorüberlaufenden Fahrzeug eine Überwachungskurve anzustoßen, nach der die Fahrgeschwindigkeit des Fahrzeugs innerhalb einer vorgegebenen Fahrzeit und/oder Fahrstrecke in vorgegebener Weise zu vermindern ist; die Übermittlung des Zwangsbremsbefehls bzw. des Befehls zur Geschwindigkeitsüberwachung geschieht auf induktivem Wege. Die Beeinflussung des Fahrzeugs kommt dadurch zustande, daß der zuerst beeinflußte Schaltmagnet mit dem Starten der Meßzeit den Gleismagneten wirksam schaltet, während der zweite Schaltmagnet diesen wieder in die Grundstellung bringt, in der der Gleismagnet unwirksam ist. Fahrzeuge mit einer Vorrückgeschwindigkeit unterhalb der im wesentlichen durch den Abstand des Schaltmagnets zum Gleismagnet definierten zulässigen Vorrückgeschwindigkeit passieren den Gleismagneten zu einem Zeitpunkt, an dem dieser nach Ablaufen der Meßzeit bereits wieder unwirksam geschaltet wurde. Nur Fahrzeuge mit einer Geschwindigkeit oberhalb der zulässigen Fahrgeschwindigkeit passieren den noch wirksam geschalteten Gleismagneten und werden dann beeinflußt.

Die Betätigung der Schaltmagnete geschieht auf induktivem Wege beim Vorüberlaufen fahrzeugseitiger Sendeeinrichtungen an den Schaltmagneten; für die Energieversorgung der Schaltmittel der Geschwindigkeitsprüfeinrichtung ist ein Versorgungsnetz oder eine örtliche Batterie erforderlich. Eine Energieentnahme zur Steuerung der Schaltmittel der Geschwindigkeitsprüfeinrichtung aus dem vorüberlaufenden Fahrzeug ist bislang u. a. deshalb nicht möglich, weil mit sehr langsamen Überfahrten und sogar mit Stillstand und Fahrrichtungsumkehr innerhalb der Meßstrecke gerechnet werden muß. Zwar kommt es dabei zu keiner Gefährdung durch unzeitiges Unwirksamschalten eines Gleismagneten. Da aber die Ein- und Ausschaltmagnete nicht ordnungsgemäß aufeinanderfolgend gearbeitet haben, wird eine Sicherheitsreaktion ausgelöst, die zum Wirksamschalten des Gleismagneten führt. Ein Folgezug wird dann z. B. zwangsgebremst, auch wenn er mit zulässiger Geschwindigkeit fährt.

Aufgabe der vorliegenden Erfindung ist es, eine nach dem Oberbegriff des Patentanspruches 1 ausgebildete Geschwindigkeitsprüfeinrichtung so auszugestalten, daß sie ohne separate Stromversorgung auskommt. Ferner ist es Aufgabe der Erfindung, eine hochzuverlässige Geschwindigkeitsprüfeinrichtung zu schaffen, die durch zusätzliche Maßnahmen auch signaltechnisch sicher ausgestaltet werden kann.

Die Erfindung löst diese Aufgabe durch die kennzeichnenden Merkmale des Patentanspruches 1. Danach wird die Zeitbewertung durch ein triggerbares Zeitglied vorgenommen, das auf einen bistabilen Schalter zum Steuern einer Beeinflussungseinrichtung einwirkt; das Zeitglied schaltet unabhängig von der Vorrückgeschwindigkeit des Fahrzeugs, das die Zeitmessung veranlaßt hat, mit Ablauf der ihm eingeprägten begrenzten Schaltzeit, in der genügend vom Fahrzeug eingekoppelte Energie zum Durchführen der Auswerte- und Schaltvorgänge zur Verfügung steht.

Vorteilhafte Ausgestaltungen und Weiterbildungen der erfindungsgemäßen Geschwindigkeitsprüfeinrichtung sind in den Unteransprüchen angegeben.

So soll nach der Lehre des Anspruches 2 der vom Fahrzeug her aufladbare Energiespeicher auf einen Spannungsregler führen, der für die nachgeordnete Auswerteeinrichtung für die Dauer der dem Zeitglied eingeprägten Schaltzeit eine ausreichend stabile, nahezu konstante Spannung bereitstellt.

Zur Anpassung der Auswerteeinrichtung an unterschiedliche Fahrzeuggeschwindigkeiten und/oder Meßstrecken soll die Auswerteeinrichtung nach der Lehre des Anspruches 3 auf unterschiedliche Meßzeiten einstellbar sein. Durch diese Maßnahme ist eine leichte Anpassung der Geschwindigkeitsprüfeinrichtung an unterschiedliche örtliche Gegebenheiten und bahnbetriebliche Forderungen möglich.

Nach der Lehre des Anspruches 4 ist eine zweikanalige Bewertung der Geschwindigkeit vorgesehen. Hierdurch ist eine außerordentlich sichere Geschwindigkeitsprüfung möglich, die gleichzeitig wegen des nur geringen Aufwandes innerhalb der einzelnen Kanäle auch noch außerordentlich zuverlässig arbeitet.

Für die zweikanalige Ausgestaltung der Geschwindigkeitsprüfeinrichtung werden zwei voneinander unabhängige Betätigungsund Speiseeinrichtungen benötigt. Diese können nach der Lehre des Anspruches 5 aus auf einen gemeinsamen Antennenstab aufgebrachten getrennten Steuermagnetwicklungen bestehen. Für die gegenseitige Überwachung des Funktionsablaufes der zweikanaligen Geschwindigkeitsprüfeinrichtung sieht die Lehre des Anspruches 6 die gegenseitige Überwachung der Schaltzeiten beim Zurücksetzen der bistabilen Schalter vor; das Ausbleiben eines solchen Signals führt dazu, daß das Unwirksamschalten der Beeinflussungseinrichtung verhindert wird.

Neben der Schaltzeit der Zeitglieder soll nach der Lehre des Anspruches 7 auch das zeitgerechte Schalten der bistabilen Schalter wechselweise überwacht werden, um so ein etwaiges Fehlverhalten der Geschwindigkeitsprüfeinrichtung erkennen zu können.

Die Schalter zum Steuern der Beeinflussungseinrichtung sind nach der Lehre des Anspruches 8 vorzugsweise als bistabile Relais ausgeführt; durch Einlesen der Kontaktstellungen dieser Relais läßt sich die Abschaltfähigkeit der Relais zum Steuern der Beeinflussungseinrichtung überprüfen.

Die Auswerteeinrichtung bzw. Auswerteeinrichtungen können gemäß Anspruch 9 in einem gemeinsamen Gehäuse innerhalb oder außerhalb des Gleises angeordnet sein. Eine besonders zweckmäßige Ausgestaltung sieht vor, diese Auswerteeinrichtungen gemäß Anspruch 10 im Gehäuse des Steuermagneten unterzubringen.

Insbesondere bei der Unterbringung der Auswerteeinrichtungen im Nahbereich der Gleise ist es von Vorteil, die Auswertefunktionen gemäß Anspruch 11 in einem integrierten Baustein zusammenzufassen, dessen Schaltverhalten weitestgehend unabhängig ist von etwaigen mechanischen Erschütterungen durch die vorüberlaufenden Fahrzeuge.

Die Beeinflussungseinrichtung ist gemäß Anspruch 12 vorteilhaft als Gleismagnet auszubilden, der ohne externe Speisung auskommt und über Schaltkontakte steuerbar ist.

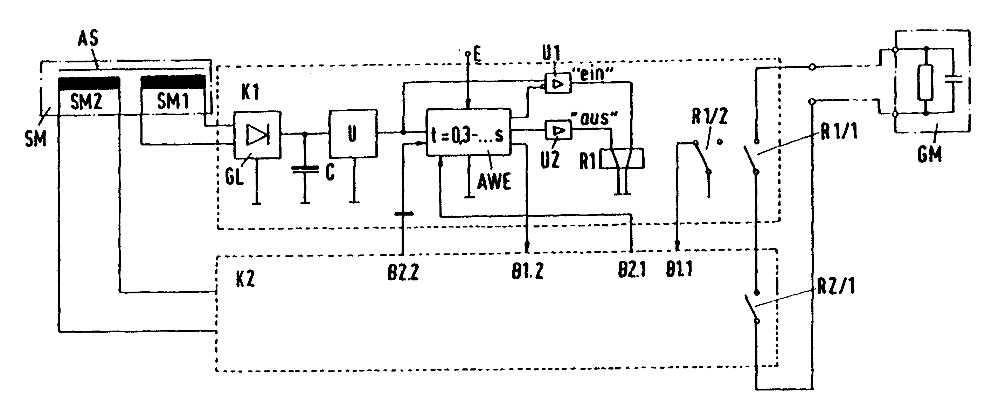

Die Erfindung ist nachstehend anhand eines in der Zeichnung schematisch dargestellten Ausführungsbeispieles näher erläutert.

Die Zeichnung zeigt die erfindungsgemäße Geschwindigkeitsprüfeinrichtung, bestehend aus einem Steuermagneten SM, einer als Gleismagnet GM ausgeführten Beeinflussungseinrichtung und einer dazwischenliegenden zweikanaligen Steuerschaltung. Die beiden Kanäle der Steuerschaltung sind identisch aufgebaut und eingangsseitig an gesonderte Wicklungen SM1 bzw. SM2 des Steuermagneten SM angeschlossen. Die beiden Steuermagnetwicklungen SM1 und SM2 sind neben- oder übereinanderliegend auf einem gemeinsamen Antennenstab AS aufgebracht und in einem neben einer Fahrschiene angeordneten gemeinsamen Gehäuse untergebracht. Dieses Gehäuse ist z. B. über Schienenfußklammern an der Fahrschiene oder auf benachbarten Schwellen befestigt. Beim Vorüberlaufen eines Fahrzeugs, das dazu eingerichtet ist, mit den gleisseitigen Komponenten einer induktiven Zugbeeinflussung zu kommunizieren, werden in den Steuermagnetwicklungen nahezu rückwirkungsfrei Spannungen induziert. Die am Ausgang der Steuermagnetwicklung SM1 anstehende Spannung wird in einem Gleichrichter GL gleichgerichtet und zur Stromversorgung der Komponenten im Kanal K1 der Steuerschaltung einem Kondensator C zugeführt. Ein nachgeschalteter Spannungsregler U stellt an seinem Ausgang eine geregelte Versorgungsspannung für die nachgeschalteten Komponenten zur verfügung, solange die eingangsseitig vom Kondensator angebotene Spannung oberhalb eines vorgegebenen Schwellwertes liegt. An den Ausgang des Spannungsreglers U ist eine Auswerteeinrichtung AWE angeschlossen. Diese Auswerteeinrichtung impliziert ein von außen her über einen Eingang E auf unterschiedliche Schaltzeiten t einstellbares Zeitglied. Über den Eingang E ist das Zeitglied und damit die Geschwindigkeitsprüfeinrichtung an unterschiedliche Meßstrecken anpaßbar. Sobald die der Auswerteeinrichtung von dem Spannungsregler U zugeführte Versorgungsspannung einen vorgegebenen Schwellwert überschreitet, startet das Zeitglied die Zeitmessung. Gleichzeitig schaltet es durch Abschalten von Sperrpotential an einem seiner Ausgänge ein nachgeschaltetes UND-Glied U1 über einen definierten Zeitraum in den niederohmigen Schaltzustand. Über dieses UND-Glied wird ein dem Kanal K1 der Steuerschaltung zugeordneter bistabiler Schalter R1, z. B. ein bistabiles Relais, in die Schaltstellung gesteuert, in der er über seinen z. B. mechanischen Schaltkontakt R1/1 den Gleismagneten GM wirksam schaltet. Dabei ist der Schaltkontakt R1/1 geöffnet, der zuvor zusammen mit dem Kontakt R2/1 eines entsprechenden bistabilen Schalters im Kanal K2 der Steuerschaltung die Komponenten des Gleismagneten über eine Zweidrahtleitung L kurzgeschlossen hatte. Passiert ein Fahrzeug mit aktivierten Sendeeinrichtungen für die induktive Informationsübertragung den wirksam geschalteten Gleismagneten, so steigt infolge induktiver Kopplung der Wirkwiderstand des Fahrzeugkreises vorübergehend an; dabei vermindert sich die Stromaufnahme der fahrzeugseitigen Sendeeinrichtungen, was auf dem Fahrzeug zu einer vorgegebenen Reaktion führt, z. B. zum Anstoßen einer Geschwindigkeitsüberwachungskurve oder zur Einleitung der Zwangsbremsung. Eine solche Fahrzeugbeeinflussung ist nur möglich, solange der Gleismagnet wirksam geschaltet ist. Er wird bei einkanaliger Ausführung der Geschwindigkeitsprüfeinrichtung durch die Steuerschaltung unwirksam geschaltet, sobald die vorgegebene Schaltzeit des Zeitgliedes abgelaufen ist. Dann schaltet die Auswerteeinrichtung AWE das UND-Glied U2 niederohmig. An den Ausgang des UND-Gliedes U2 ist die Rückstellwicklung des bistabilen Schalters R1 angeschlossen. Der bistabile Schalter R1 wechselt in seine andere stabile Lage, in der er seine Schaltkontakte in die in der Zeichnung nicht dargestellte Lage umsteuert. Über den Schaltkontakt R1/1 des bistabilen Schalters R1 und den Kontakt R2/1 des entsprechenden bistabilen Schalters im Kanal K2 der Steuerschaltung werden dabei die Komponenten des Gleismagneten GM kurzgeschlossen. Ein Fahrzeug, das den in diesem Schaltzustand befindlichen Gleismagneten passiert, wird durch diesen nicht beeinflußt, d. h. der Gleismagnet ist unwirksam geschaltet.

Die vorstehend erläuterte Steuerschaltung, bestehend aus den Schaltmitteln zur Energieversorgung, dem einstellbaren Zeitglied und dem bistabilen Schalter, hat gegenüber herkömmlichen Steuerschaltungen für den gleichen Zweck mit gesonderten Ein- und Ausschaltschaltmagneten neben anderem den großen Vorteil, daß sie innerhalb der ihr eingeprägten Schaltzeit wieder in den Ausgangsschaltzustand zurückkehrt. Diesen Ausgangsschaltzustand erreicht sie auch, wenn Fahrzeuge die Meßstrecke sehr langsam durchfahren oder in der Meßstrecke anhalten oder ihre Fahrrichtung umkehren. Es gehen dabei also keine Ausschaltsignale verloren, selbst dann nicht, wenn - wie bei der vorliegenden Erfindung - nur eine zeitlich begrenzte Stromversorgung für die Bauelemente der Steuerschaltung vorhanden ist.

Durch die Verwendung nur weniger störunanfälliger Bauelemente ist eine hohe Zuverlässigkeit der Geschwindigkeitsprüfeinrichtung gegeben. Darüber hinaus wirkt sich die Verwendung nur weniger Bauelemente außerordentlich günstig auf die Kosten für die Geschwindigkeitsprüfeinrichtung aus. Anstelle von bislang drei in separaten Gehäusen separat am Gleis zu montierenden Magneten und einem zusätzlichen Schaltkasten werden nunmehr nur lediglich zwei solcher Magnete benötigt. Das spart Kosten bei der Installation und auch laufende Kosten bei der Gleiswartung, weil nunmehr lediglich zwei anstelle von drei Gleismagneten bei Gleiswartungsarbeiten abzunehmen und anschließend wieder zu montieren sind.

Neben der Zuverlässigkeit läßt sich auch eine hohe Sicherheit im Funktionsverhalten der Geschwindigkeitsprüfeinrichtung erreichen, wenn die Steuerschaltung zweikanalig ausgeführt wird. Die Schaltmittel des zweiten Kanals K2 werden aus der am Ausgang der Steuermagnetwicklung SM2 verfügbaren Spannung versorgt. Beide Steuerschaltungen wirken gemeinsam auf den zu steuernden Gleismagneten. Solange eine von beiden Steuerschaltungen durch Öffnen des Kontaktes R1/1 bzw. R2/1 den Gleismagneten GM wirksam schaltet, bleibt dieser auch wirksam geschaltet und nur dann, wenn beide Steuerschaltungen die Schaltkontakte R1/1 und R2/1 schließen, kann der Gleismagnet GM unwirksam geschaltet werden; in diesem Schaltzustand des Gleismagneten kann das Fahrzeug die Geschwindigkeitsprüfstrecke unbeeinflußt passieren.

Um etwaige Fehlfunktionen einer Steuerschaltung erkennen zu können, tauschen die beiden Steuerschaltungen bestimmte Signale untereinander aus und bewerten sie. Ein solches Signal ist z. B. das das Ende der Meßzeit anzeigende Signal. Beim Ablauf der dem Zeitglied der Auswerteeinrichtung AWE zugeordneten Schaltzeit wird ein diesbezügliches Signal auf den Eingang B1.2 des Kanals K2 der Steuerschaltung gelegt. Die Auswerteeinrichtung des Kanals K2 wartet mit der Ausgabe ihres Abschaltsignals an den Gleismagneten auf das Eintreffen des Signals aus dem anderen Kanal, das das Ende der dort ablaufenden Schaltzeit anzeigt. Erst wenn dieses Signal vorliegt und wenn die Schaltzeit des eigenen Schaltgliedes abgelaufen ist, veranlaßt die Auswerteeinrichtung des Kanals K2 das Schließen des Schalters R2/1 zum Unwirksamschalten des Gleismagneten. In entsprechender Weise verfährt auch die Auswerteeinrichtung AWE des Kanals K1, der hierzu das entsprechende Signal des Kanals K2 über den Ausgang B2.2 zugeführt wird.

Die beiden Steuerschaltungen vergleichen neben den Schaltzeiten ihrer Zeitglieder auch den Schaltzustand ihrer bistabilen Schalter. Hierzu legt die Steuerschaltung des Kanals K1 mittels eines Kontaktes R1/2 eine entsprechende Meldung an ihren Ausgang B1.1. Die Steuerschaltung des Kanals K2 vergleicht diese Meldung mit der entsprechenden Meldung ihres eigenen bistabilen Schalters. Eine die Schaltstellung ihres eigenen bistabilen Schalters kennzeichnende Meldung führt sie über den Ausgang B2.1 dem entsprechenden Eingang der Steuerschaltung des Kanals K1 zu. Erkennt eine der beiden Steuerschaltungen, daß die zu vergleichenden Schaltzustände der bistabilen Schalter über eine vorgegebene Mindestzeit voneinander abweichen, so liegt ein Fehler vor; der Ausgabeverstärker U2 wird dann nicht aktiviert und der Gleismagnete bleibt wirksam geschaltet. Dadurch wird der Fehler offenbart und zwingt zur Beseitigung der Störung.

Mindestens ein Teil der Steuerschaltung, nämlich die zur Spannungsregelung, zur zeitlichen Bewertung von Befahrungsereignissen und zur Bewertung von Referenzsignalen lassen sich integrieren; die entsprechenden Schaltmittel sind damit weitgehend gegen mechanische Beeinflussung geschützt. Sie sowie die übrigen Schaltmittel der Steuerschaltung lassen sich im Gehäuse des Steuermagneten unterbringen, doch ist es auch möglich, sie in einem gleisnahen Gehäuse anzuordnen. Die beiden zusammenwirkenden Gleismagneten, nämlich der Steuermagnet zum Auskoppeln von Energie und zum Anstoßen der Zeitmessungen und der Gleismagnet GM für die bedarfsweise Beeinflussung vorüberlaufender Fahrzeuge, sind dann lediglich noch über die Doppelleitung L miteinander verbunden, ohne daß es weitere Schaltmittel entlang der Strecke gibt, die von außen her beeinflußt werden müßten.

Die erfindungsgemäße Geschwindigkeitsprüfeinrichtung ist unabhängig davon anwendbar, welche Frequenzen für die Zugbeeinflussung verwendet werden und welche Reaktionen auf dem Fahrzeug ausgelöst werden. Für ihren Betrieb ausschließlich von Bedeutung ist, daß jedes in die Geschwindigkeitsprüfung einzubeziehende Fahrzeug beim Passieren des Steuermagneten Energie in die Steuermagnete einspeist, die auf den Fahrzeugen aber noch nicht zu einer Reaktion wie beim Passieren eines wirksam geschalteten Gleismagneten führen.

Die Beeinflussungseinrichtung kann wie im dargestellten Ausführungsbeispiel aus einem Parallelschwingkreis bestehen aber auch aus jeder anderen möglichen Einrichtung zur Informationsübertragung, die von außen her wirksam und unwirksam zu schalten ist. Anstelle eines auf induktivem Wege wirkenden Gleismagneten könnten dort auch andere punktförmige Übertragungseinrichtungen oder beim Vorhandensein ausreichender Energie auch linienförmig wirkende Übertragungseinrichtungen vorhanden sein.

## Patentansprüche

1. Geschwindigkeitsprüfeinrichtung für den Bahnbetrieb mit einer von einem Fahrzeug auf induktivem Weg triggerbaren Zeitmessung und einer räumlich nachgeordneten Beeinflussungseinrichtung (GM), die zu Beginn der Zeitmessung wirksam und mit Ablauf einer vorgebbaren Meßzeit unwirksam zu schalten ist,
**dadurch gekennzeichnet,**
**daß** ein einziger in Fahrrichtung vor der Beeinflussungseinrichtung (GM) am Gleis angeordneter und von einem vorüberlaufenden Fahrzeug induktiv beeinflußbarer Steuermagnet (SM) vorgesehen ist, wobei die am Ausgang einer Steuermagnetwicklung (SM1) des Steuermagneten (SM) anstehende Spannung in einem Gleichrichter (GL) gleichgerichtet und zur Stromversorgung einer Auswerteeinrichtung (AWE) einem Energiespeicher (C) zugeführt wird, wobei die Auswerteeinrichtung (AWE) beim Anstieg der Versorgungsspannung über einen gegebenen Schwellwert eine Zeitmessung startet und einen bistabilen Schalter (R1) zum Wirksamschalten der Beeinflussungseinrichtung (GM) einstellt und bei Ablauf der ihr eingeprägten Schaltzeit den bistabilen Schalter (R1) zum Unwirksamschalten der Beeinflussungseinrichtung (GM)wieder zurückstellt.

2. Geschwindigkeitsprüfeinrichtung nach Anspruch 1,
**dadurch gekennzeichnet,**
**daß** der Auswerteeinrichtung (AWE) ein aus dem Energiespeicher (C) betriebener Spannungsregler (U) vorgeschaltet ist.

3. Geschwindigkeitsprüfeinrichtung nach Anspruch 1 oder 2,
**dadurch gekennzeichnet,**
**daß** die Auswerteeinrichtung (AWE1) über einen Steuereingang (E) auf unterschiedliche Meßzeiten (t1) für unterschiedliche Überwachungsgeschwindigkeiten und/oder unterschiedliche Meßstrecken einstellbar ist.

4. Geschwindigkeitsprüfeinrichtung nach einem der Ansprüche 1 bis 3,
**dadurch gekennzeichnet,**
**daß** zwei getrennte, aus gesonderten Wicklungen (SM1, SM2) des Steuermagneten (SM) gespeiste, auf die gleiche Schaltzeit (t1) eingestellte Auswerteeinrichtungen (AWE) mit von diesen steuerbaren bistabilen Schaltern vorgesehen sind und daß die Schaltstrecken (R1/1, R2/1) der bistabilen Schalter im Steuerstromkreis der Beeinflussungseinrichtung (GM) einander in Reihe geschaltet sind.

5. Geschwindigkeitsprüfeinrichtung nach Anspruch 4,
**dadurch gekennzeichnet,**
**daß** die beiden Steuermagnetwicklungen (SM1, SM2) auf einen gemeinsamen Antennenstab (AS) aufgebracht sind.

6. Geschwindigkeitsprüfeinrichtung nach Anspruch 4 oder 5,
**dadurch gekennzeichnet,**
**daß** jede Auswerteeinrichtung (AWE) auf den Ablauf der ihr eingeprägten Schaltzeit (t1) der jeweils anderen Auswerteeinrichtung ein diesbezügliches Signal übermittelt und daß das Rücksetzen des von einer Auswerteeinrichtung (AWE) jeweils gesteuerten bistabilen Schalters (R1) vom Empfang des Signals der jeweils anderen Auswerteeinrichtung abhängig gemacht ist.

7. Geschwindigkeitsprüfeinrichtung nach einem der Ansprüche 4 bis 6,
**dadurch gekennzeichnet,**
**daß** jede Auswerteeinrichtung (AWE) eine Meldung über den Schaltzustand des von der jeweils anderen Auswerteeinrichtung gesteuerten bistabilen Schalters bewertet und auf das Ausbleiben eines dessen Rücksetzung kennzeichnenden Signals innerhalb einer definierten Zeitspanne seit Beginn oder Ende der Zeitmessung eine diesbezügliche Fehlermeldung setzt.

8. Geschwindigkeitsprüfeinrichtung nach einem der Ansprüche 1 bis 7,
**dadurch gekennzeichnet,**
**daß** der/die bistabilen Schalter (R1) als bistabile Relais ausgebildet ist/sind, wobei bei zweikanaliger Ausführung jeweils ein Kontakt (R1/2) dieses Relais das Signal zur Kennzeichnung der Abschaltfähigkeit des betreffenden Relais (R1) auf den Bewertungseingang (B1.1) der jeweils anderen Auswerteeinrichtung schaltet.

9. Geschwindigkeitsprüfeinrichtung nach einem der Ansprüche 1 bis 8,
**dadurch gekennzeichnet,**
**daß** die Auswerteeinrichtung/Auswerteeinrichtungen (AWE) in einem Gehäuse angeordnet ist/sind und daß die Beeinflussungseinrichtung (GM) über eine Zweidrahtleitung (L) mit der bzw. den Auswerteeinrichtungen (AWE) verbunden ist.

10. Geschwindigkeitsprüfeinrichtung nach Anspruch 9,
**dadurch gekennzeichnet,**
**daß** die Auswerteeinrichtung/Auswerteinrichtungen (AWE) im Gehäuse des Steuermagneten (SM) angeordnet ist/sind.

11. Geschwindigkeitsprüfeinrichtung nach einem der Ansprüche 1 bis 10,
**dadurch gekennzeichnet,**
**daß** die Auswertefunktionen der Auswerteeinrichtung/Auswerteeinrichtungen (AWE) in einem integrierten Baustein zusammengefaßt sind.

12. Geschwindigkeitsprüfeinrichtung nach einem der Ansprüche 1 bis 11,
**dadurch gekennzeichnet,**
**daß** die Beeinflussungseinrichtung (GM) als Gleismagnet, bestehend aus einander parallelgeschalteter Induktivität und Kapazität, ausgebildet ist.

## Claims

1. Velocity checking device for railways having a time measurement which can be triggered inductively by a vehicle and an influencing device (GM) which is arranged spatially downstream and is to be activated at the start of the time measurement and deactivated when a predefinable measuring time has expired, **characterized in that** a single control magnet (SM) which is arranged on the track upstream of the influencing device (GM) in the direction of travel and can be influenced inductively by a vehicle passing by is provided, the voltage which is present at the output of a control magnet winding (SM1) of the control magnet (SM) being rectified in a rectifier (GL) and fed to an energy accumulator (C) in order to supply power to an evaluation device (AWE), the evaluation device (AWE) starting a time measurement when the supply voltage rises above given threshold value and setting a bistable switch (R1) in order to activate the influencing device (GM) and, when the switching time impressed on it expires, resetting the bistable switch (R1) again in order to deactivate the influencing device (GM).

2. Velocity checking device according to Claim 1, **characterized in that** a voltage regulator (U) which is operated from the energy accumulator (C) is connected upstream of the evaluation device (AWE).

3. Velocity checking device according to Claim 1 or 2, **characterized in that** the evaluation device (AWE1) can be set, by means of a control input (E), to different measuring times (t1) for different monitoring speeds and/or different measured distances.

4. Velocity checking device according to one of Claims 1 to 3, **characterized in that** two separate evaluation devices (AWE) which are fed from separate windings (SM1, SM2) of the control magnet (SM) and are set to the same switching time (t1) are provided with bistable switches which can be controlled by them, and **in that** the contact gaps (R1/1, R2/1) of the bistable switches are connected in series with one another in the controlled circuit of the influencing device (GM).

5. Velocity checking device according to Claim 4, **characterized in that** the two control magnet windings (SM1, SM2) are mounted on a common antenna rod (AS).

6. Velocity checking device according to Claim 4 or 5, **characterized in that** each evaluation device (AWE) transmits, in response to the expiry of the switching time (t1), impressed on it, of the respective other evaluation device, a signal relating thereto, and **in that** the resetting of the bistable switch (R1), which is respectively controlled by an evaluation device (AWE), is made dependent on the reception of the signal of the respective other evaluation device.

7. Velocity checking device according to one of Claims 4 to 6, **characterized in that** each evaluation device (AWE) evaluates a message about the switch state of the bistable switch which is controlled by the respective other evaluation device, and, in response to the failure of a signal characterizing the resetting of said switch within a defined time period since the start or end of the time measurement, sets a failure message relating to this.

8. Velocity checking device according to one of Claims 1 to 7, **characterized in that** the bistable switch or switches (R1) is/are embodied as bistable relays, in which case, in the case of a two-channel embodiment, in each case a contact (R1/2) of this relay connects the signal for characterizing the ability of the respective relay (R1) to switch off to the evaluation input (B1.1) of the respective other evaluation device.

9. Velocity checking device according to one of Claims 1 to 8, **characterized in that** the evaluation device/evaluation devices (AWE) is/are arranged in a housing, and **in that** the influencing device (GM) is connected to the evaluation device or devices (AWE) via a two-wire line (L).

10. Velocity checking device according to Claim 9, **characterized in that** the evaluation device/evaluation devices (AWE) is/are arranged in the housing of the control magnet (SM).

11. Velocity checking device according to one of Claims 1 to 10, **characterized in that** the evaluation functions of the evaluation device/evaluation devices (AWE) are combined in an integrated module.

12. Velocity checking device according to one of Claims 1 to 11, **characterized in that** the influencing device (GM) is embodied as a track-mounted magnet, composed of an inductor and capacitor which are connected in parallel with one another.

## Revendications

1. Dispositif de contrôle de vitesse pour services de chemins de fer, comportant une mesure de temps qui peut être déclenchée par induction par un véhicule et un dispositif d'influence (GM) qui est placé du côté aval dans l'espace et qui est à commuter à l'état actif au début de la mesure de temps et à l'état inactif à l'expiration d'un temps de mesure pouvant être prescrit,
**caractérisé par le fait qu'**il est prévu un seul électro-aimant de commande (SM) qui est placé sur la voie avant - dans le sens d'avance - le dispositif d'influence (GM) et qui peut être influencé par induction par un véhicule passant devant, la tension présente à la sortie d'un enroulement d'électro-aimant de commande (SM1) de l'électro-aimant de commande (SM) étant redressée dans un redresseur (GL) et étant envoyée à un accumulateur d'énergie (C) pour l'alimentation en courant d'un dispositif d'évaluation (AWE), lequel dispositif d'évaluation (AWE) fait débuter une mesure de temps lors de l'augmentation de la tension d'alimentation au-dessus d'une valeur de seuil donnée, règle un interrupteur bistable (R1) pour commuter à l'état actif le dispositif d'influence (GM) et remet à l'état initial l'interrupteur bistable (R1) pour commuter à l'état inactif le dispositif d'influence (GM) à l'expiration du temps de commutation appliqué à ce dispositif d'évaluation.

2. Dispositif de contrôle de vitesse selon la revendication 1,
**caractérisé par le fait qu'**un régulateur de tension (U) fonctionnant à partir de l'accumulateur d'énergie (C) est branché du côté amont du dispositif d'évaluation (AWE).

3. Dispositif de contrôle de vitesse selon la revendication 1 ou 2,
**caractérisé par le fait que** le dispositif d'évaluation (AWE1) est réglable par l'intermédiaire d'une entrée de commande (E) sur différents temps de mesure (t1) pour différentes vitesses de contrôle et/ou pour différentes sections de mesure.

4. Dispositif de contrôle de vitesse selon l'une des revendications 1 à 3,
**caractérisé par le fait que** deux dispositifs d'évaluation (AWE) séparés, alimentés à partir d'enroulements particuliers (SM1, SM2) de l'électro-aimant de commande (SM) et réglés sur le même temps de commutation (t1) sont prévus avec des interrupteurs bistables pouvant être commandés par ces dispositifs d'évaluation et que les sections de commutation (R1/1, R2/1) des interrupteurs bistables sont branchées en série dans le circuit de courant de commande du dispositif d'influence (GM).

5. Dispositif de contrôle de vitesse selon la revendication 4,
**caractérisé par le fait que** les deux enroulements d'électro-aimant de commande (SM1, SM2) sont montés sur une antenne tige (AS) commune.

6. Dispositif de contrôle de vitesse selon la revendication 4 ou 5,
**caractérisé par le fait que** chaque dispositif d'évaluation (AWE) transmet à l'expiration du temps de commutation (t1) qui lui est appliqué un signal concernant cet événement à l'autre dispositif d'évaluation respectif et que la remise à l'état initial de l'interrupteur bistable (R1) commandé respectivement par un dispositif d'évaluation (AWE) est rendue dépendante de la réception du signal de l'autre dispositif d'évaluation respectif.

7. Dispositif de contrôle de vitesse selon l'une des revendications 4 à 6,
**caractérisé par le fait que** chaque dispositif d'évaluation (AWE) évalue un message concernant l'état de commutation de l'interrupteur bistable commandé par l'autre dispositif d'évaluation respectif et que, en l'absence d'un signal caractérisant la remise à l'état initial de celui-ci pendant un intervalle de temps défini depuis le début ou la fin de la mesure de temps, il envoie un message d'erreur concernant cette absence.

8. Dispositif de contrôle de vitesse selon l'une des revendications 1 à 7,
**caractérisé par le fait que** le ou les interrupteurs bistables (R1 ) sont conçus comme des relais bistables et que, dans le cas d'une réalisation à deux canaux, à chaque fois un contact (R1/2) de ce relais commute le signal de caractérisation de la capacité de coupure du relais concerné (R1) sur l'entrée d'évaluation (B1.1 ) de l'autre dispositif d'évaluation respectif.

9. Dispositif de contrôle de vitesse selon l'une des revendications 1 à 8,
**caractérisé par le fait que** le ou les dispositifs d'évaluation (AWE) sont placés dans un boîtier et que le dispositif d'influence (GM) est relié au ou aux dispositifs d'évaluation (AWE) par l'intermédiaire d'une ligne bifilaire (L).

10. Dispositif de contrôle de vitesse selon la revendication 9,
**caractérisé par le fait que** le ou les dispositifs d'évaluation (AWE) sont placés dans le boîtier de l'électro-aimant de commande (SM).

11. Dispositif de contrôle de vitesse selon l'une des revendications 1 à 10,
**caractérisé par le fait que** les fonctions d'évaluation du ou des dispositifs d'évaluation (AWE) sont regroupées dans un composant intégré.

12. Dispositif de contrôle de vitesse selon l'une des revendications 1à11,
**caractérisé par le fait que** le dispositif d'influence (GM) est conçu comme un électro-aimant de voie constitué d'une inductance et d'une capacité branchées en parallèle l'une de l'autre.
